# EUROPEAN PATENT APPLICATION

(11) **EP 4 848 848 A1**
(43) Date of publication of application: **02.12.2026**
(21) Application number: 25745484.3
(22) Date of filing: 21.01.2025
(51) Int. Cl.: H04W 64/00, H04W 24/08, H04W 48/20, H04W 48/08, G01S 13/00

(54) **METHOD AND APPARATUS RELATED TO WIRELESS SENSING**

(30) Priority: 24.01.2024 KR 20240010604
(71) Applicant: LG Electronics Inc., Yeongdeungpo-gu Seoul 07336 (KR)
(72) Inventor: KO, Woosuk, Seoul 06772 (KR)
(74) Representative: Frenkel, Matthias Alexander
(86) International application number: PCT/KR2025/001118
(87) International publication number: WO 2025/159467

(57) **Abstract**

In one embodiment, a method performed by a first device is provided. For example, the first device can: establish a radio resource control connection between the first device and a second device; select an entity to perform a sensing operation; and, on the basis that the entity to perform the sensing operation is not the second device with which the radio resource control connection has been established, transmit, to the second device, information related to the entity to perform the sensing operation.

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free internet of things (IoT) devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. For example, Table 1 may show the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

In an embodiment, a method is provided that is performed by a first device. For example, the first device may establish a radio resource control connection between the first device and a second device. For example, the first device may select an entity to perform a sensing operation. For example, the first device may, based on that the entity to perform the sensing operation is not the second device with which the radio resource control connection is established, transmit information related to the entity to perform the sensing operation to the second device.

In an embodiment, a first device is provided. The first device may comprise: at least one transceiver; at least one processor; and at least one memory connected to the at least one processor and storing instructions that, based on being executed by the at least one processor, cause the first device to perform operations. For example, the operations may comprise at least one of: establishing a radio resource control connection between the first device and a second device; selecting an entity to perform a sensing operation; and/or based on that the entity to perform the sensing operation is not the second device with which the radio resource control connection is established, transmitting information related to the entity to perform the sensing operation to the second device.

In an embodiment, a processing device adapted to control a first device is provided. The processing device may comprise: at least one processor; and at least one memory connected to the at least one processor and storing instructions that, based on being executed by the at least one processor, cause the first device to perform operations. For example, the operations may comprise at least one of: establishing a radio resource control connection between the first device and a second device; selecting an entity to perform a sensing operation; and/or based on that the entity to perform the sensing operation is not the second device with which the radio resource control connection is established, transmitting information related to the entity to perform the sensing operation to the second device.

In an embodiment, a non-transitory computer-readable storage medium storing instructions is provided. The instructions may cause a first device to perform operations. For example, the operations may comprise at least one of: establishing a radio resource control connection between the first device and a second device; selecting an entity to perform a sensing operation; and/or based on that the entity to perform the sensing operation is not the second device with which the radio resource control connection is established, transmitting information related to the entity to perform the sensing operation to the second device.

### BRIEF DESCRIPTION OF THE DRAWINGS

FIG. 1 shows a communication procedure between devices based on an embodiment of the present disclosure.
FIG. 2 shows a radio protocol architecture, based on an embodiment of the present disclosure.
FIG. 3 shows a structure of a radio frame, based on an embodiment of the present disclosure.
FIG. 4 shows a slot structure of a frame, based on an embodiment of the present disclosure.
FIG. 5 shows an example of a BWP, based on an embodiment of the present disclosure.
FIG. 6 shows a communication structure providable in a 6G system, based on an embodiment of the present disclosure.
FIG. 7 shows an example of a communication scenario based on a 6G system, based on an embodiment of the present disclosure.
FIG. 8 shows an example of a sensing operation, based on an embodiment of the present disclosure.
FIG. 9 is a diagram for explaining a method related to wireless sensing, based on an embodiment of the present disclosure.
FIG. 10 is a diagram for explaining a method related to wireless sensing, based on an embodiment of the present disclosure.
FIG. 11 is a diagram for explaining a procedure of a method related to wireless sensing, based on an embodiment of the present disclosure.
FIG. 12 shows a method performed by a first device, based on an embodiment of the present disclosure.
FIG. 13 shows a method performed by a second device, based on an embodiment of the present disclosure.
FIG. 14 shows a communication system 1, based on an embodiment of the present disclosure.
FIG. 15 shows wireless devices, based on an embodiment of the present disclosure.
FIG. 16 shows a signal process circuit for a transmission signal, based on an embodiment of the present disclosure.
FIG. 17 shows another example of a wireless device, based on an embodiment of the present disclosure.
FIG. 18 shows a hand-held device, based on an embodiment of the present disclosure.
FIG. 19 shows a vehicle or an autonomous vehicle, based on an embodiment of the present disclosure.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, the term "configured or defined" may be interpreted as being pre-configured or configured to a device through pre-defined signaling (e.g., SIB, MAC, RRC, downlink control information (DCI), etc.) from a base station or a network. In the present disclosure, the term "configured or defined" may be interpreted as being pre-configured or configured to a device through pre-defined signaling (e.g., MAC, RRC, sidelink control information (SCI), control information signaled between devices, etc.) from another device. In the present disclosure, the term "configured or defined" may be interpreted as being pre-configured to a device.

In the present disclosure, a user equipment (UE) may refer to a device, a portable device, a wireless device, etc. In the present disclosure, a base station (BS) may refer to a radio access network (RAN) node, a non-terrestrial network (NTN) cell/node, a transmission reception point (TRP), a network, an integrated access and backhaul (IAB) node, a device, a portable device, a wireless device, etc.

The technology proposed in the present disclosure may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet radio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

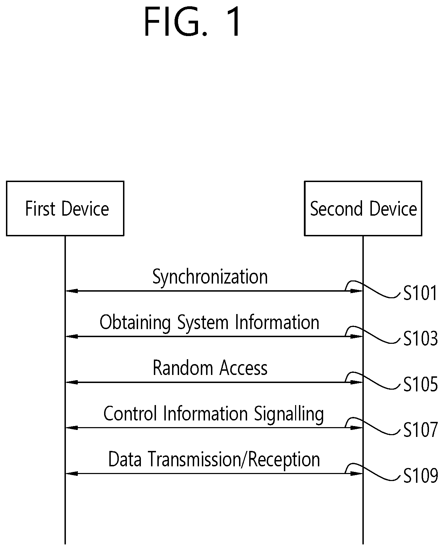

FIG. 1 shows a communication procedure between devices based on an embodiment of the present disclosure. The embodiment of FIG. 1 may be combined with various embodiments of the present disclosure.

Referring to FIG. 1, in step S101, a first device and a second device may perform synchronization. For example, the first device may be at least one of a UE and/or a device proposed in the present disclosure. For example, the second device may be at least one of a base station, a network, a RAN node, an NTN node/cell, a TRP, a UE, and/or a device proposed in the present disclosure. For example, the first device may perform an initial cell search operation. For example, the first device may detect at least one synchronization signal transmitted based on a rule pre-defined by the second device. Herein, for example, the synchronization signal may include a plurality of synchronization signals (e.g., a primary synchronization signal, a secondary synchronization signal, etc.) classified based on a structure or a purpose. By this, the first device may check a boundary of a frame, a subframe, a time unit, a slot and/or a symbol of the second device, and the first device may obtain information (e.g., a cell identifier) for the second device.

In step S103, the first device may obtain system information transmitted by the second device. For example, the system information may include information related to attributes, characteristics, and/or capabilities of the second device required to access the second device and use a service. For example, the system information may be classified based on content (e.g., whether it is essentially required for access), a transmission structure (e.g., a used channel, whether it is provided based on on-demand), etc. For example, the system information may be classified into a master information block (MIB) and a system information block (SIB). For example, as needed, the first device may transmit a signal requesting the system information prior to receiving the system information. For example, a request and provision of the system information may be performed after a random access procedure to be described later.

In step S105, the first device and the second device may perform a random access procedure. For example, the first device may transmit and/or receive at least one message (e.g., a random access preamble, a random access response message, etc.) for the random access procedure, based on information related to a random access channel of the second device (e.g., a channel position, a channel structure, a structure of a supported preamble, etc.) obtained through the system information. For example, the first device may transmit a preamble (e.g., Msg1) through a random access channel, and the first device may receive a random access response message (e.g., Msg2), and the first device may transmit a message (e.g., Msg3) including information related to the first device (e.g., identification information) to the second device by using scheduling information included in the random access response message, and the first device may receive a message (e.g., Msg4) for contention resolution and/or connection establishment. For example, Msg1 and Msg3 may be transmitted and received as one message (e.g., MsgA), and/or Msg2 and Msg4 may be transmitted and received as one message (e.g., MsgB).

In step S107, the first device and the second device may perform signaling of control information. Herein, for example, the control information may be defined in various layers such as a layer controlling a connection (e.g., a radio resource control (RRC) layer), a layer processing mapping between a logical channel and a transport channel (e.g., a media access control (MAC) layer), a layer processing a physical channel (e.g., a physical (PHY) layer), etc. For example, the first device and the second device may perform at least one of signaling for establishing a connection, signaling for determining a configuration related to communication, and/or signaling for indicating allocated resources. For example, the control information may be signaled/transmitted through a control channel. For example, the control information and/or the control channel may be used in scheduling at least one of data, a data channel (e.g., a shared channel), and/or control information on the data channel.

In step S109, the first device and the second device may transmit and/or receive data. For example, the first device and the second device may process data based on the signaling of the control information, and transmit and/or receive the data. For example, in a case of transmitting data, the first device or the second device may perform at least one of channel encoding, rate matching, scrambling, constellation mapping, layer mapping, waveform modulation, antenna mapping, and/or resource mapping for information bits. For example, in a case of receiving data, the first device or the second device may perform at least one of signal extraction from a resource, waveform demodulation for each antenna, signal arrangement considering layer mapping, constellation demapping, descrambling, and/or channel decoding.

For example, layers of a radio interface protocol between the first device and the second device may be classified into a first layer (layer 1, L1), a second layer (layer 2, L2), a third layer (layer 3, L3), etc. For example, a physical layer belonging to the first layer may provide an information transfer service using a physical channel, and a radio resource control (RRC) layer located in the third layer may perform a role of controlling radio resources between the first device and the second device. To this end, for example, the RRC layer may exchange an RRC message between the first device and the second device.

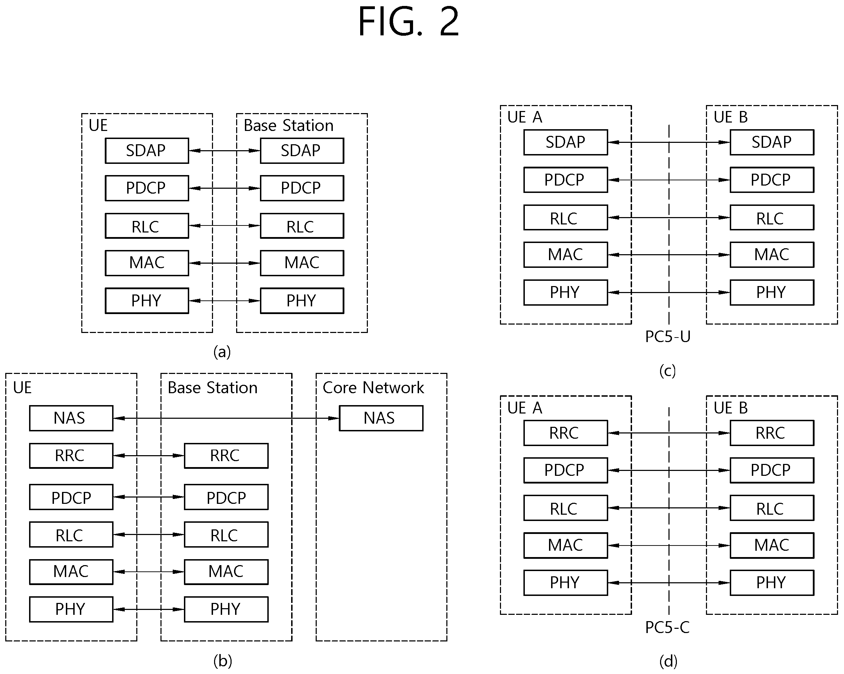

FIG. 2 shows a radio protocol architecture, based on an embodiment of the present disclosure. The embodiment of FIG. 2 may be combined with various embodiments of the present disclosure. For example, (a) of FIG. 2 may show a radio protocol stack of a user plane for uplink communication or downlink communication, and (b) of FIG. 2 may show a radio protocol stack of a control plane for uplink communication or downlink communication. For example, (c) of FIG. 2 may show a radio protocol stack of a user plane for inter-device communication, and (d) of FIG. 2 may show a radio protocol stack of a control plane for inter-device communication.

For example, the physical layer may provide an information transfer service to a higher layer using a physical channel. For example, the physical layer may be connected with a medium access control (MAC) layer, which is a higher layer, through a transport channel. For example, data may be transferred between the MAC layer and the physical layer through the transport channel. For example, the transport channel may be classified based on how and with what characteristics data is transmitted through a radio interface. For example, data may be transmitted through a physical channel between different physical layers, e.g., between physical layers of the first device and the second device. For example, the physical channel may be modulated in an orthogonal frequency division multiplexing (OFDM) scheme, and time and frequency may be utilized as radio resources.

For example, the MAC layer may provide a service to a radio link control (RLC) layer, which is a higher layer, through a logical channel. For example, the MAC layer may provide a mapping function from a plurality of logical channels to a plurality of transport channels. For example, the MAC layer may provide a logical channel multiplexing function by mapping from a plurality of logical channels to a single transport channel. For example, a MAC sub-layer may provide a data transmission service on a logical channel.

For example, the RLC layer may perform concatenation, segmentation, and reassembly of an RLC service data unit (SDU). For example, in order to guarantee various quality of service (QoS) required by a radio bearer (RB), the RLC layer may provide three operation modes of transparent mode (TM), unacknowledged mode (UM), and acknowledged mode (AM). For example, an AM RLC may provide error correction through an automatic repeat request (ARQ).

For example, the radio resource control (RRC) layer may be defined only in the control plane. For example, the RRC layer may serve to control the logical channel, the transport channel, and the physical channel in relation to configuration, reconfiguration, and release of radio bearers. For example, the RB may refer to a logical path provided by the first layer (e.g., the physical layer) and the second layer (e.g., the MAC layer, the RLC layer, a packet data convergence protocol (PDCP) layer, a service data adaptation protocol (SDAP) layer, etc.) for data delivery between the first device and the second device.

For example, a function of the PDCP layer in the user plane may include delivery of user data, header compression, and ciphering. For example, a function of the PDCP layer in the control plane may include delivery of control plane data and ciphering/integrity protection.

For example, the configuration of the RB may imply a process for specifying a radio protocol layer and channel properties to provide a particular service and for configuring each specific parameter and operation method. For example, the RB may be divided into two types: a signaling radio bearer (SRB) and a data radio bearer (DRB). For example, the SRB may be used as a path for transmitting an RRC message in the control plane, and the DRB may be used as a path for transmitting user data in the user plane.

For example, a downlink transport channel may include at least one of a broadcast channel (BCH) transmitting system information, and/or a downlink shared channel (SCH) transmitting user traffic or a control message other than that. For example, in a case of traffic or a control message of a downlink multicast or broadcast service, it may be transmitted through the downlink SCH, or it may be transmitted through a separate downlink multicast channel (MCH). Meanwhile, an uplink transport channel may include at least one of a random access channel (RACH) transmitting an initial control message, and/or an uplink shared channel (SCH) transmitting user traffic or a control message other than that. For example, the logical channel, which is located above the transport channel and mapped to the transport channel, may include at least one of a broadcast control channel (BCCH), a paging control channel (PCCH), a common control channel (CCCH), a multicast control channel (MCCH), and/or a multicast traffic channel (MTCH).

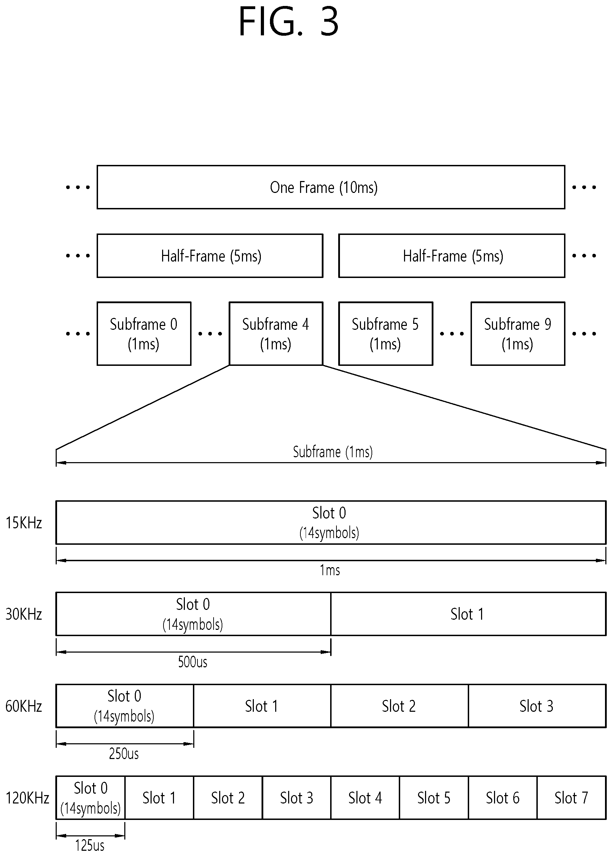

FIG. 3 shows a structure of a radio frame, based on an embodiment of the present disclosure. The embodiment of FIG. 3 may be combined with various embodiments of the present disclosure.

Referring to FIG. 3, for example, a radio frame may be used in uplink transmission, downlink transmission, and/or inter-device transmission. For example, the radio frame may have a length of 10ms, and may be defined as two 5ms half-frames (HF). For example, the half-frame may include five 1ms subframes (SF). For example, the subframe may be divided into one or more slots, and the number of slots within the subframe may be determined based on a subcarrier spacing (SCS). For example, each slot may include 12 or 14 OFDM(A) symbols based on a cyclic prefix (CP).

For example, in a case where a normal CP is used, each slot may include 14 symbols. For example, in a case where an extended CP is used, each slot may include 12 symbols. Herein, for example, the symbol may include an OFDM symbol (or, a CP-OFDM symbol), and/or a single carrier-FDMA (SC-FDMA) symbol (or, a Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

For example, between a plurality of cells aggregated to one UE, OFDM(A) numerologies (e.g., SCS, CP length, etc.) may be configured differently. Accordingly, an (absolute time) duration of a time resource (e.g., subframe, slot, or transmit time interval (TTI)) configured with the same number of symbols may be configured differently between the aggregated cells. For example, in the present disclosure, a time resource such as a subframe, a slot, a TTI, etc. may be referred to as a time unit.

For example, a plurality of numerologies or SCSs may be supported to support various services. For example, in a case where the SCS is 15kHz, a wide area in conventional cellular bands may be supported, and in a case where the SCS is 30kHz/60kHz, a dense-urban, a lower latency, and a wider carrier bandwidth may be supported. For example, in a case where the SCS is 60kHz or higher than that, a bandwidth greater than 24.25GHz may be supported to overcome phase noise.

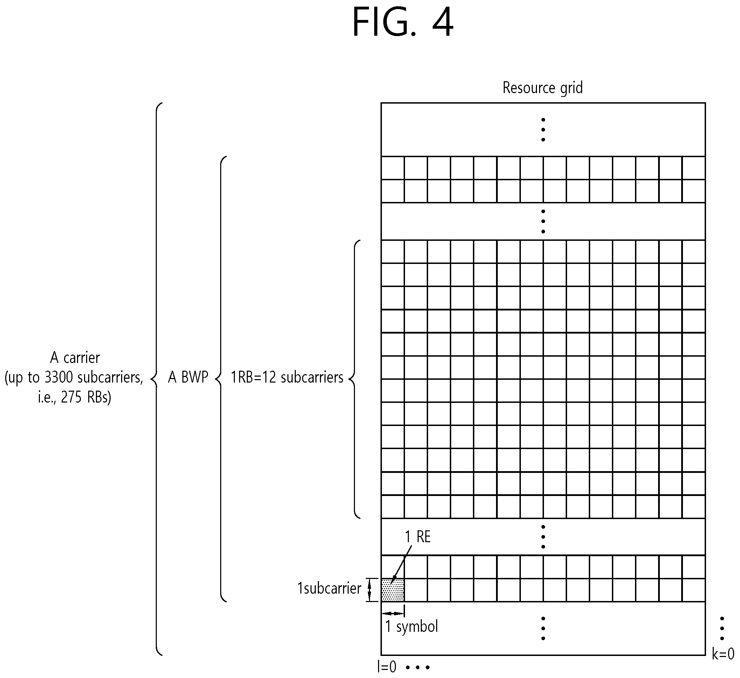

FIG. 4 shows a slot structure of a frame, based on an embodiment of the present disclosure. The embodiment of FIG. 4 may be combined with various embodiments of the present disclosure.

Referring to FIG. 4, for example, a slot may include a plurality of symbols in a time domain. For example, a carrier may include a plurality of subcarriers in a frequency domain. For example, a resource block (RB) may be defined as a plurality of consecutive subcarriers in the frequency domain. For example, a bandwidth part (BWP) may be defined as a plurality of consecutive (physical) resource blocks ((P)RB) in the frequency domain, and may correspond to one numerology (e.g., SCS, CP length, etc.). For example, a carrier may include a maximum of N BWPs (where N is a positive integer). For example, data communication may be performed through an activated BWP. For example, each element may be referred to as a resource element (RE) in a resource grid, and one complex symbol may be mapped to each element.

For example, a BWP may be a set of consecutive PRBs in a given numerology. For example, a PRB may be selected from a subset of consecutive common resource blocks (CRB) for a given numerology on a given carrier.

For example, a BWP may be at least one of an active BWP, an initial BWP, and/or a default BWP. For example, a UE may not monitor a downlink radio link quality in a DL BWP other than an active DL BWP on a primary cell (PCell). For example, the UE may not receive a physical downlink control channel (PDCCH), a physical downlink shared channel (PDSCH), or a channel state information-reference signal (CSI-RS) (excluding radio resource management (RRM)) outside the active DL BWP. For example, the UE may not trigger a channel state information (CSI) report for an inactive DL BWP. For example, the UE may not transmit a physical uplink control channel (PUCCH) or a physical uplink shared channel (PUSCH) outside an active UL BWP. For example, in a case of downlink, an initial BWP may be given as a set of consecutive resource blocks (RB) for a remaining minimum system information (RMSI) control resource set (CORESET) (configured by a physical broadcast channel (PBCH)). For example, in a case of uplink, an initial BWP may be given by a system information block (SIB) for a random access procedure. For example, a default BWP may be configured by a higher layer. For example, an initial value of the default BWP may be an initial DL BWP. For energy saving, if the UE does not detect downlink control information (DCI) for a certain period of time, the UE may switch the active BWP of the UE to the default BWP.

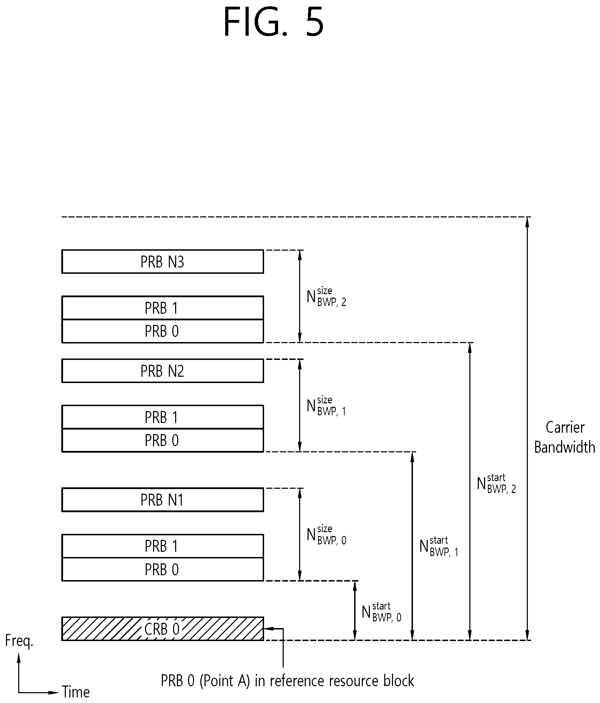

FIG. 5 shows an example of a BWP, based on an embodiment of the present disclosure. The embodiment of FIG. 5 may be combined with various embodiments of the present disclosure. In the embodiment of FIG. 5, it is assumed that there are three BWPs.

Referring to FIG. 5, for example, a common resource block (CRB) may be a carrier resource block numbered from one end of a carrier band to the other end thereof, and a PRB may be a resource block numbered within each BWP. For example, Point A may indicate a common reference point for a resource block grid.

For example, a BWP may be configured by Point A, an offset N^{start}_{BWP} from Point A, and a bandwidth N^{size}_{BWP}. For example, Point A may be an external reference point of a PRB of a carrier where subcarrier 0 of all numerologies (e.g., all numerologies supported by a network on the corresponding carrier) is aligned. For example, the offset may be a PRB interval between a lowest subcarrier and Point A in a given numerology. For example, the bandwidth may be the number of PRBs in the given numerology.

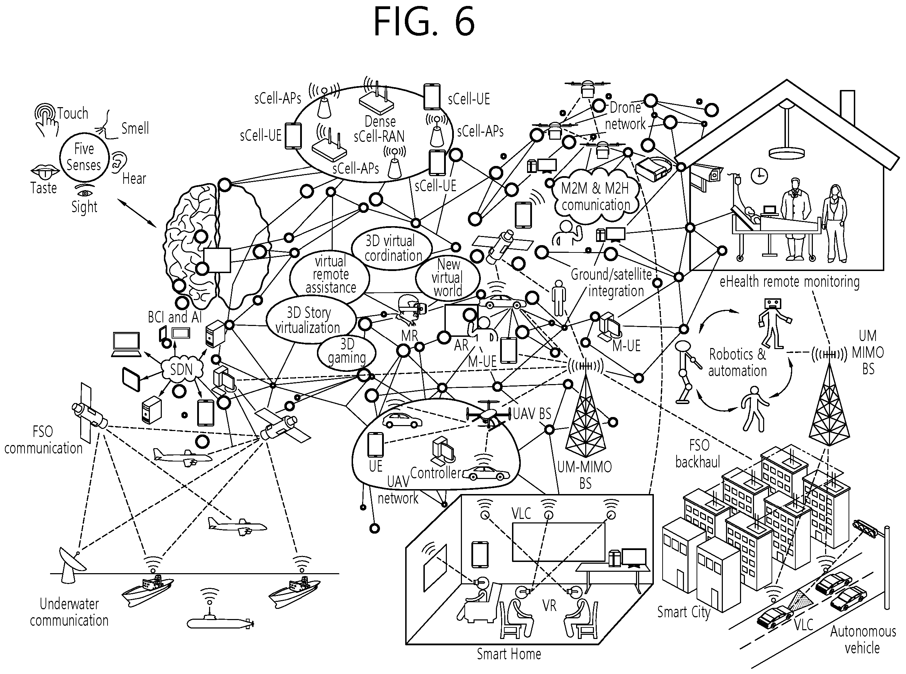

FIG. 6 shows a communication structure providable in a 6G system, based on an embodiment of the present disclosure. The embodiment of FIG. 6 may be combined with various embodiments of the present disclosure.

As core implementation technologies of the 6G system, technologies such as artificial intelligence (AI), Terahertz (THz) communication, optical wireless technology, free space optical (FSO) backhaul network, massive multiple input multiple output (MIMO) technology, blockchain, 3D networking, quantum communication, unmanned aerial vehicle, cell-free communication, wireless information and energy transfer (WIET), integrated sensing and communication, integrated access and backhaul network, holographic beamforming, big data analytics, large intelligent surface (LIS), etc. may be adopted.
- Artificial Intelligence (AI): When AI is introduced to communication, real-time data transmission may be simplified and improved. AI may determine a method of performing complicated target tasks using countless analysis. For example, AI may increase efficiency and reduce processing delay. Operation consuming time such as handover, network selection, and resource scheduling may be immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-THz communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Advanced air mobility (AAM): AAM may be a broad concept encompassing urban air mobility (UAM), regional air mobility (RAM), and an uncrewed aerial system (UAS). For example, AAM may include UAM, RAM, UAS, an uncrewed aerial vehicle (UAV), etc.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on.
- Non-terrestrial network (NTN): NTN may represent a network or a network segment using radio frequency (RF) resources mounted on a satellite (or a UAS platform). Use of an NTN service may be considered to secure wider coverage or to provide a wireless communication service to a place where installation of a wireless communication base station is not easy.
- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc.
- Reconfigurable intelligent surface (RIS): RIS may be used to manipulate and enhance signal propagation in a wireless communication environment. For example, RIS may be composed of meta-surfaces or many small antennas arranged on a surface, and each small antenna may actively adjust a phase, an amplitude, a polarization, etc. of a reflected signal. For example, RIS can improve signal reception by adjusting a path, a phase, and/or an intensity of a propagated signal. For example, in a case of RIS, because power is consumed only for phase and amplitude adjustment of small antennas, power consumption may be very low. For example, because RIS may be reconfigured in accordance with various environments, it can satisfy various communication requirements and can effectively operate in a dynamic network environment.

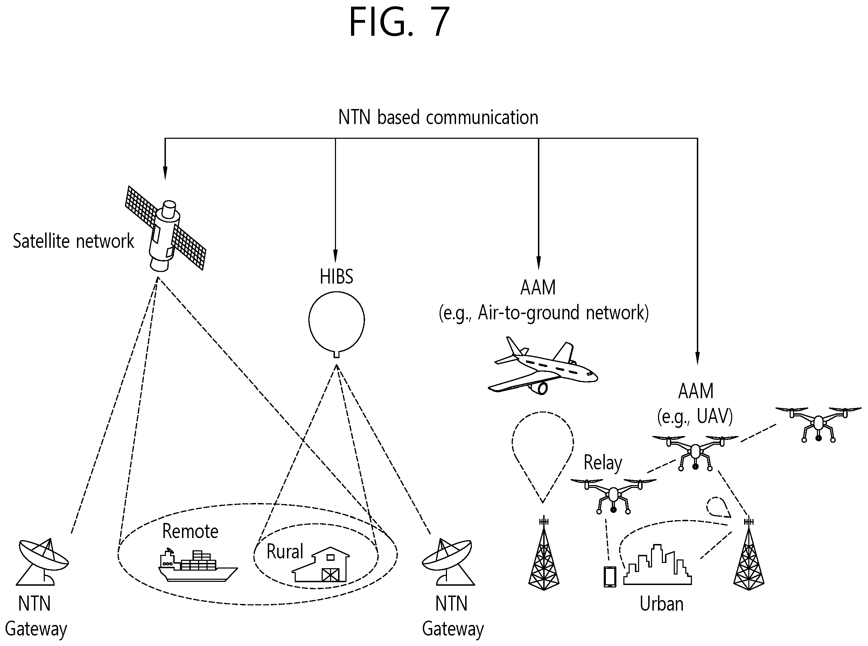

FIG. 7 shows an example of a communication scenario based on a 6G system, based on an embodiment of the present disclosure. The embodiment of FIG. 7 may be combined with various embodiments of the present disclosure.

Referring to FIG. 7, NTN communication may be performed based on a satellite network, high-altitude platform stations (HAPS) as international mobile telecommunications (IMT) base stations (BS) (HIBS), a UE (e.g., AAM) capable of aerial communication, etc. For example, for coverage enhancement, etc., a device such as the satellite network, the HIBS, the UE (e.g., AAM) capable of aerial communication, etc. may perform a role of a relay. For example, the AAM may perform communication with a base station, a satellite network, etc., and/or the AAM may perform direct communication with a UE, another AAM, etc.

Hereinafter, the above-mentioned integrated sensing and communication (ISAC) is described in detail.

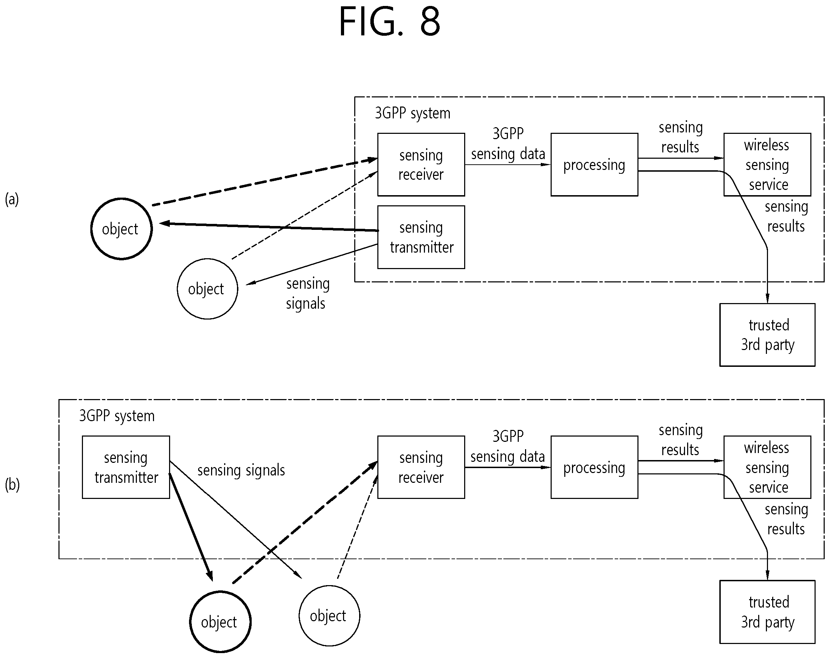

As for integrated sensing and communication (ISAC), wireless sensing is a technology that can obtain information about characteristics of the environment and/or objects within the environment, that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, e.g., sensing operation, may rely on processing the transmissions, reflections, and scattering of wireless sensing signals. Wireless sensing, therefore, may have the opportunity to enhance the legacy system from a communication network to a wireless communication and sensing network. FIG. 8 shows an example of a sensing operation, based on an embodiment of the present disclosure. The embodiment of FIG. 8 may be combined with various embodiments of the present disclosure. Specifically, (a) of FIG. 8 shows an example of sensing (e.g., monostatic sensing) with co-located sensing receiver and sensing transmitter, and (b) of FIG. 8 shows an example of sensing (e.g., bistatic sensing) with separated sensing receiver and sensing transmitter.

The present disclosure may be applied to an operation for positioning and/or an operation for integrated sensing and communication (ISAC).

In the present disclosure, the following terms may be used.

For example, the following "PRS" or "SL PRS" may be interpreted/applied by being replaced with a "sensing signal" or a "sensing reference signal (RS)".
- LMF: location management function
- UE-triggered SL positioning: sidelink (SL) positioning where the procedure is triggered by the UE.
- Base station/LMF-triggered SL positioning: SL positioning where the procedure is triggered by the base station/LMF
- UE-controlled SL positioning: SL positioning where the SL positioning group is created by the UE
- Base station-controlled SL positioning: SL positioning where the SL positioning group is created by the base station
- UE-based SL positioning: SL positioning where the UE position is calculated by the UE
- UE-assisted SL positioning: SL positioning where the UE position is calculated by the base station/LMF
- SL positioning group: UEs that participate in SL positioning
- Target UE (T-UE): UE whose position is calculated
- Server UE (S-UE): UE that assists T-UE's positioning
- Anchor UE: UE that assists T-UE's positioning
- MG: measurement gap where only SL PRS transmission is allowed
- MW: measurement window where both SL data and SL PRS can be transmitted in a multiplexed way
- SL PRS: sidelink positioning reference signal
- CCH: control channel
- Inter-UE coordination (IUC) message: a message that a TX UE receives from other UEs, including an RX UE, that includes information regarding a set of resources (preferred resources) suitable for transmission and/or information regarding a set of resources (non-preferred resources) not suitable for transmission by the TX UE to the RX UE
- Sensing RS: a reference signal used for a sensing purpose (e.g., a reference signal, a radar, a LiDAR, a Wi-Fi signal, an ultrasonic signal, etc.)
- BS-BS sensing: BS-BS sensing may refer to sensing where BS#1 transmits a sensing RS and BS#2 receives the sensing RS. For example, a case where BS#1 and BS#2 are distinct BSs from each other may refer to a BS-BS bi-static sensing operation. For example, a case where BS#1 and BS#2 are the same BS may refer to a BS-BS mono-static sensing operation. For example, the BS may be a base station or a transmission and reception point (TRP). For example, a case where BS#1 and/or BS#2 are one or more BSs may refer to a BS-BS multi-static sensing operation.
- BS-UE sensing: BS-UE sensing may refer to sensing where a BS transmits a sensing RS and a UE receives the sensing RS. For example, the BS may be a base station or a transmission and reception point (TRP). For example, a case where the BS and/or the UE are one or more BSs and/or one or more UEs may refer to a BS-UE multi-static sensing operation.
- UE-BS sensing: UE-BS sensing may refer to sensing where a UE transmits a sensing RS and a BS receives the sensing RS. For example, the BS may be a base station or a transmission and reception point (TRP). For example, a case where the BS and/or the UE are one or more BSs and/or one or more UEs may refer to a UE-BS multi-static sensing operation.
- UE-UE sensing: UE-UE sensing may refer to sensing where UE#1 transmits a sensing RS and UE#2 receives the sensing RS. For example, a case where UE#1 and UE#2 are distinct UEs from each other may refer to a UE-UE bi-static sensing operation. For example, a case where UE#1 and UE#2 are the same UE may refer to a UE-UE mono-static sensing operation. For example, the BS may be a base station or a transmission and reception point (TRP). For example, a case where UE#1 and/or UE#2 are one or more UEs may refer to a UE-UE multi-static sensing operation.
- SMF: sensing management function
- TSA: target sensing area (a location area requiring sensing (deriving a characteristic of an object and/or an environment from an impacted (e.g., reflected, refracted, diffracted) sensing signal) having a certain quality of a sensing service)

For example, a SL PRS transmission resource may include SL PRS resource set(s) comprising the following information.
- SL PRS resource set ID
- SL PRS resource ID list: a list of SL PRS resource IDs in a SL PRS resource set
- SL PRS resource type: which can be set to periodic, aperiodic, semi-persistent or on-demand
- Alpha for SL PRS power control
- P0 for SL PRS power control
- Path loss reference for SL PRS power control: which can be set to SL SSB or DL PRS or UL SRS or UL SRS for positioning or PSCCH DMRS or PSSCH DMRS or PSFCH or SL CSI RS, etc.

For example, the SL PRS resource set may include SL PRS resource(s) comprising the following information.
- SL PRS resource ID
- SL PRS comb size: an interval between REs for SL PRS transmission within a symbol
- SL PRS comb offset: an RE index in which the SL PRS is first transmitted within the first SL PRS symbol
- SL PRS comb cyclic shift: a cyclic shift used to generate a sequence that makes up the SL PRS
- SL PRS start position: an index of the first symbol in which the SL PRS is transmitted within one slot
- Number of SL PRS symbols: the number of symbols configured for the SL PRS within one slot
- Frequency domain shift: the lowest frequency position (index) in the frequency domain in which the SL PRS is transmitted
- SL PRS BW: frequency bandwidth used for SL PRS transmission
- SL PRS resource type: which can be set to periodic, aperiodic, semi-persistent or on-demand
- SL PRS periodicity: periodicity in the time domain between SL PRS resources, in a unit of physical slot or a unit of logical slot in a resource pool in which the SL PRS is transmitted
- SL PRS offset: an offset in the time domain to the start of the first SL PRS resource relative to reference timing, in a unit of physical slot or a unit of logical slot in a resource pool in which the SL PRS is transmitted. The reference timing may be SFN=0 or DFN=0 or the time of successful reception or decoding of RRC / MAC-CE / DCI / SCI associated with the SL PRS resource.
- SL PRS sequence ID
- SL PRS spatial relation: which can be set to SL SSB or DL PRS or UL SRS or UL SRS for positioning or PSCCH DMRS or PSSCH DMRS or PSFCH or SL CSI RS, etc.
- SL PRS CCH: SL PRS control channel. It can signal SL PRS resource configuration information, resource location, etc.

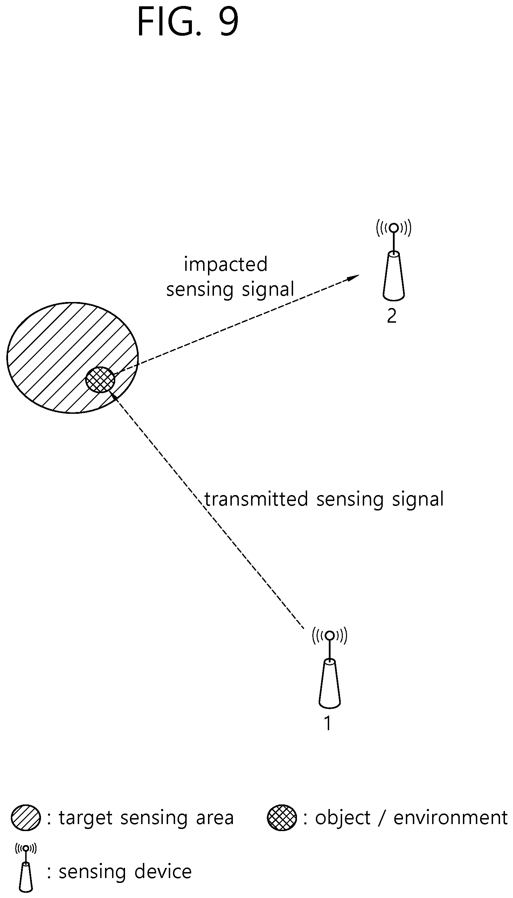

FIG. 9 is a diagram for explaining a method related to wireless sensing, based on an embodiment of the present disclosure. The embodiment of FIG. 9 may be combined with various embodiments of the present disclosure.

Referring to FIG. 9, for example, in order to implement a bistatic sensing function based on an integrated sensing and communication (ISAC) system, a first device (within a sensing group) may transmit a sensing signal. For example, the first device may transmit a sensing signal for a target sensing area (an object therein and/or an indoor/outdoor environment surrounding the object (e.g., other objects around a location of the object (e.g., clutter), other obstacles between the object and other objects (e.g., line-of-sight, non-line-of-sight, etc.))). For example, a second device (within the sensing group) may receive a sensing signal impacted (e.g., reflected, refracted, diffracted) by an object/an indoor/outdoor environment surrounding the object with respect to the transmitted sensing signal. Through this, it may be operated to sense the object and/or the environment. For example, by receiving/processing the impacted sensing signal, information on the object or the like (e.g., horizontal/vertical object detection, a location of the object, and/or a distance (range) to the object, and/or a direction (angle) to the object, and/or a velocity of the object, and/or geometric information of the object, and/or object recognition (e.g., a vehicle, a human, an animal, a UAV, etc.), etc.) may be obtained.

For example, the sensing signal may be a dedicated signal for a purpose of sensing, and/or may be a positioning reference signal that can perform positioning, and/or may be a reference signal that can be used for communication such as a demodulation-reference signal (DM-RS), a channel state information-reference signal (CSI-RS), a sounding reference signal (SRS), and/or may be a fused signal for purposes of both sensing and communication. For example, the sensing signal may be at least one of a radar, a LiDAR, a Wi-Fi signal, a camera (image), or an ultrasonic signal.

For example, the second device receiving the impacted sensing signal may be within the same entity as the first device transmitting the sensing signal. For example, the second device receiving the impacted sensing signal may be located separately from the first device transmitting the sensing signal. For example, information related to a location of the first device and/or a location of the second device may be known. For example, information related to a time of the first device (e.g., a time when the sensing signal is transmitted) and/or a time of the second device (e.g., a time when the impacted sensing signal is received) may be known. For example, at least one first device transmitting the sensing signal and/or at least one second device receiving the impacted sensing signal may be within the sensing group.

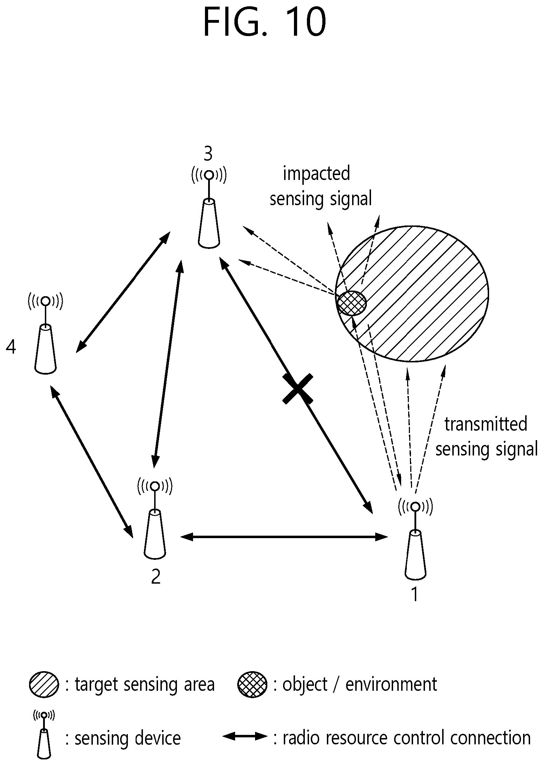

FIG. 10 is a diagram for explaining a method related to wireless sensing, based on an embodiment of the present disclosure. The embodiment of FIG. 10 may be combined with various embodiments of the present disclosure.

Referring to FIG. 10, for example, a target sensing area may be determined by a first device, and/or a second device, and/or a third device (e.g., SMF, etc.) different from the first device and the second device. For example, the target sensing area may be defined based on a boundary (e.g., a boundary line, a boundary surface). For example, the target sensing area may be defined based on a circle/sphere formed of a center point of the area (at a certain height (range)) and/or a radius of the area. For example, the target sensing area may be defined based on a regular N-gon formed of a center point of the area (at a certain height (range)) and/or a length of the area. For example, the target sensing area may be defined based on a zone ID (at a certain height (range)) and/or a zone length. For example, the target sensing area may be defined based on a position (range) measured/predicted by positioning (at a certain height (range)) and/or a threshold value (e.g., a position error). For example, the target sensing area may be defined based on a unit length of the area, and/or a center point of the area, and/or an angle (e.g., an azimuth angle) (range) with respect to a first reference line passing through the center point, and/or an angle (e.g., a zenith angle) (range) with respect to a second reference line passing through the center point, or an elevation angle (range) based on the first reference line passing through the center point. For example, the target sensing area may be defined based on a latitude (range), and/or a longitude (range), and/or a height (range).

For example, at least one device performing a sensing operation (e.g., at least one device within a sensing group) may be selected. For example, the at least one device may be selected based on the target sensing area. For example, the at least one device may be selected based on being within a threshold distance from the target sensing area. For example, the at least one device may be selected based on being within the closest distance from the target sensing area.

For example, in order to implement a bistatic sensing function, a first device (within a sensing group) may transmit a sensing signal. For example, the first device may transmit a first sensing signal (based on beamforming, and/or in a direction of (a boundary of, a center of, etc.) a target sensing area) for the target sensing area (an object therein and/or an indoor/outdoor environment surrounding the object (e.g., other objects around a location of the object (e.g., clutter), other obstacles between the object and other objects (e.g., line-of-sight, non-line-of-sight, etc.))). For example, a second device (within the sensing group) may receive a second sensing signal impacted (e.g., reflected, refracted, diffracted) by an object/an indoor/outdoor environment surrounding the object with respect to the transmitted first sensing signal.

However, for example, a first device selected to perform a sensing operation according to the embodiment(s) may establish a radio resource connection (e.g., RRC_CONNECTED, RRC_INACTIVE) with a second device not selected to perform a sensing operation according to the embodiment(s), but the first device selected to perform a sensing operation according to the embodiment(s) may not establish a radio resource connection (e.g., RRC_CONNECTED, RRC_INACTIVE) with a third device selected to perform a sensing operation according to the embodiment(s) (e.g., RRC_IDLE). For example, the second device not selected to perform a sensing operation according to the embodiment(s) may establish a radio resource connection (e.g., RRC_CONNECTED, RRC_INACTIVE) with the third device selected to perform a sensing operation according to the embodiment(s), and/or may establish a radio resource connection (e.g., RRC_CONNECTED, RRC_INACTIVE) with a fourth device not selected to perform a sensing operation according to the embodiment(s).

For example, from the perspective of the third device (e.g., RRC_IDLE) for which a radio resource connection (e.g., RRC_CONNECTED, RRC_INACTIVE) is not established, even if it is selected to perform a sensing operation, it cannot know at all what time/frequency resource the first device uses to transmit information requesting (instructing) to transmit a sensing signal or perform a sensing operation, how far the position of the first device is from the third device, and/or what time/frequency resource the third device ultimately uses to receive an impacted sensing signal or information requesting (instructing) to receive the impacted sensing signal. Therefore, for example, even if device(s) performing a sensing operation are selected based on a target sensing area or a position of a sensing group, etc. in order for sensing to be efficiently performed, only a meaningless or unnecessary sensing operation (e.g., of the first device and the third device) may be performed, and/or sensing efficiency and/or quality of a sensing service may be degraded.

Based on an embodiment of the present disclosure, for example, based on that the device selected to perform the sensing operation is not a device for which a radio resource connection is established, information related to the device selected to perform the sensing operation (e.g., an ID of the device (e.g., a source ID, a destination ID, a cell ID, a synchronization ID, etc.)) may be transmitted to the device for which a radio resource connection is established. For example, based on that the third device selected to perform the sensing operation is not a device for which a radio resource connection is established with the first device, information related to the third device selected to perform the sensing operation (e.g., an ID of the third device (e.g., a source ID, a destination ID, a cell ID, a synchronization ID, etc.)) may be transmitted to the second device and/or the fourth device for which a radio resource connection is established. For example, the second device and/or the fourth device receiving the information related to the third device selected to perform the sensing operation may establish a connection for controlling the third device (e.g., a radio resource control connection, etc.) with the third device (already, or thereafter). For example, the second device and/or the fourth device receiving the information related to the third device selected to perform the sensing operation may transmit, to the third device, the information related to the sensing operation (e.g., information indicating that it is selected to perform the sensing operation, information related to a sensing group (member) performing the sensing operation, information related to a target sensing area, information related to a resource (ID) for performing the sensing operation, information related to a signal (ID) for performing the sensing operation, etc.). For example, the third device may receive an impacted sensing signal with respect to a sensing signal transmitted toward the target sensing area by the first device, based on the information related to the sensing operation.

Based on an embodiment(s) of the present disclosure, for example, by delivering information related to a TX BS, which is a non-serving cell close to a target sensing area, to a serving cell, the serving cell and an RX UE can induce the non-serving cell close to the target sensing area to perform a sensing operation. For example, by providing information related to the TX BS, which is a non-serving cell for which an RRC connection is not established, to the serving cell for which an RRC connection is established, the serving cell for which an RRC connection is established and the RX UE can indirectly control a sensing operation of the TX BS, which is a non-serving cell for which an RRC connection is not established. For example, multi-static/bistatic sensing can be efficiently performed.

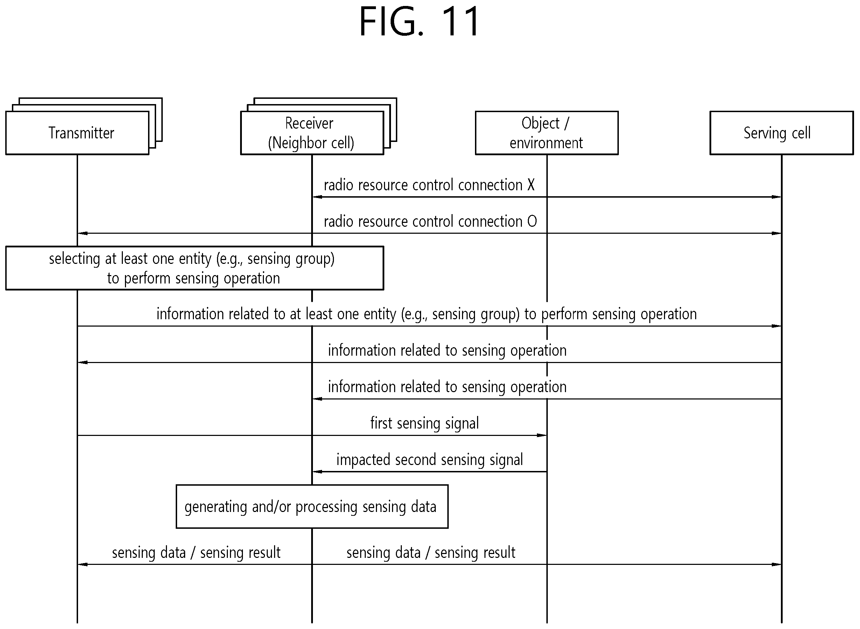

FIG. 11 is a diagram for explaining a procedure of a method related to wireless sensing, based on an embodiment of the present disclosure. The embodiment of FIG. 11 may be combined with various embodiments of the present disclosure.

Referring to FIG. 11, for example, at least one second device (receiving device) may not establish a radio resource control connection with a serving cell (e.g., RRC_CONNECTED, RRC_INACTIVE). For example, at least one first device (transmitting device) may establish a radio resource control connection with a serving cell (e.g., RRC_IDLE).

For example, at least one first device and/or at least one second device, or at least one third device different from the first device and the second device, may select at least one entity (e.g., a sensing group (member)) to perform a sensing operation. For example, at least one entity (e.g., a sensing group (member)) to perform a sensing operation may be selected based on a target sensing area (and a threshold distance). For example, at least one entity (e.g., a sensing group (member)) to perform a sensing operation may be selected based on an entity to receive an impacted sensing signal (and a threshold distance).

For example, at least one first device (transmitting device) may transmit, to the serving cell, information related to at least one entity (e.g., a sensing group (member)) to perform a sensing operation (e.g., ID information (e.g., a source ID, a destination ID, a cell ID, a synchronization ID, etc.)). For example, the serving cell or at least one fourth device for which a connection (e.g., a radio resource control connection) with the serving cell is established may transmit, to at least one first device and/or at least one second device, information related to a sensing operation (e.g., information indicating that it is selected to perform the sensing operation, information related to a sensing group (member) performing the sensing operation, information related to a target sensing area, information related to a resource (ID) for performing the sensing operation, information related to a signal (ID) for performing the sensing operation, etc.).

For example, at least one first device (selected to perform a sensing operation) may transmit a first sensing signal to an object inside or outside a target sensing area and/or an environment surrounding the object.

For example, at least one second device (selected to perform a sensing operation) may receive an impacted (e.g., reflected, refracted, diffracted) second sensing signal.

For example, at least one second device (selected to perform a sensing operation) may generate and/or process sensing data based on the second sensing signal.

For example, at least one second device (selected to perform a sensing operation) may transmit the generated sensing data and/or the processed sensing result to at least one first device and/or at least one third device (e.g., an SMF, a serving cell, etc.).

Based on an embodiment of the present disclosure, in case of a BS-UE sensing operation, an entity determining a target sensing area and an operation of the entity may need to be defined.

In the present disclosure, in case of a BS-UE sensing operation, a method of performing the BS-UE sensing according to an entity determining a target sensing area may be proposed.

Based on an embodiment of the present disclosure, for example, in case of BS-UE bi-static sensing in which a TX BS may transmit a sensing RS, and/or an RX device (e.g., RX UE) may receive a signal in which the sensing RS is reflected, etc. by an object, and/or a sensing operation may be performed by performing measurement on the received sensing RS, the TX BS and/or the RX device (e.g., RX UE) may perform BS-UE bi-static sensing through an operation such as at least one of the following.
- For example, a Sensing Management Function (SMF) may determine a target sensing area.
   -- For example, a TX BS may perform an SMF operation, or
   -- For example, the SMF may determine a TX device (e.g., TX BS) and/or an RX device (e.g., RX UE) to participate in sensing, or may instruct the TX device (e.g., TX BS) and/or the RX device (e.g., RX UE) to participate in sensing.
      --- For example, from among BS(s) and UE(s) within a threshold distance from the target sensing area, a TX device (e.g., TX BS) and/or an RX device (e.g., RX UE) to participate in the BS-UE bi-static sensing may be determined.
      --- For example, from among the BSs and the UEs, a BS and a UE for which a line-of-sight between a TX device (e.g., TX BS) and an RX device (e.g., RX UE) is secured may be determined as the TX device (e.g., TX BS) and/or the RX device (e.g., RX UE).
- For example, a TX device (e.g., TX BS) may determine a target sensing area.
   -- For example, it may be limited to a case where the TX device (e.g., TX BS) performs an SMF operation.
   -- For example, the TX device (e.g., TX BS) determining the target sensing area may transmit the target sensing area information to an RX device (e.g., RX UE).
      --- For example, it may be transmitted through a dedicated protocol for a sensing operation and/or a physical downlink control channel (PDCCH)/physical downlink shared channel (PDSCH).
      --- For example, in case of BS-UE multi-static sensing, the TX device (e.g., TX BS) may transmit the target sensing area information to other TX device(s) (e.g., TX BS(s)) participating in sensing.
      --- For example, in case of BS-UE multi-static sensing, the RX device (e.g., RX UE) may transmit the target sensing area information received from the TX device (e.g., TX BS) to other RX device(s) (e.g., RX UE(s)) participating in sensing.
   -- For example, the RX device (e.g., RX UE) may report a sensing result to the SMF or the TX device (e.g., TX BS) determining the target sensing area.
      --- For example, it may be transmitted through a dedicated protocol for a sensing operation and/or a physical uplink control channel (PUCCH)/physical uplink shared channel (PUSCH).
      --- For example, in case of BS-UE multi-static sensing, the RX device (e.g., RX UE) may transmit a sensing result measured based on the sensing RS to the TX device (e.g., TX BS) transmitting the sensing RS.

For example, the TX device (e.g., TX BS) determining the target sensing area may determine the RX devices (e.g., RX UEs) based on the target sensing area, and/or may instruct the corresponding RX devices (e.g., RX UEs) to perform the sensing operation.
--- For example, from among UE(s) within a threshold distance from the target sensing area, the RX device (e.g., RX UE) to participate in the BS-UE bi-static sensing may be determined.
--- For example, from among the UEs, a UE for which a line-of-sight with a TX device (e.g., TX BS) is secured may be determined as the TX device (e.g., TX BS) and/or an RX device (e.g., RX UE).
--- For example, the RX devices (e.g., RX UEs) may be limited to UEs in a radio resource control (RRC) connected mode state with the TX device (e.g., TX BS).
--- For example, the TX device (e.g., TX BS) may determine the target sensing area within its own coverage area.

- For example, an RX device (e.g., RX UE) may determine a target sensing area.
   -- For example, the RX device (e.g., RX UE) may determine a target sensing area, and/or may transmit the target sensing area information to a TX device (e.g., TX BS).
      --- For example, the RX device (e.g., RX UE) may select a TX device (e.g., TX BS) to transmit a sensing RS based on the target sensing area information.
      ---- For example, the BS closest to the target sensing area may be selected.
      ---- For example, a BS within a threshold distance from the target sensing area may be selected.
      ---- For example, the BS closest to a position of the RX device (e.g., RX UE) itself may be selected.
      ---- For example, a BS within a threshold distance from a position of the RX device (e.g., RX UE) itself may be selected.
      ---- For example, a BS establishing a radio resource control (RRC) connected mode with the RX device (e.g., RX UE) may be selected.
         ----- For example, if a BS of a neighbor cell, which is not a serving cell of the RX device (e.g., RX UE), is selected as the TX device (e.g., TX BS), BS information of the selected neighbor cell may be reported to the BS of the serving cell.
      --- For example, in case of BS-UE multi-static sensing, the TX device (e.g., TX BS) may transmit the target sensing area information received from the RX device (e.g., RX UE) to other TX device(s) (e.g., TX BS(s)) participating in sensing.
      --- For example, in case of BS-UE multi-static sensing, the RX device (e.g., RX UE) may transmit the target sensing area information to other RX device(s) (e.g., RX UE(s)) participating in sensing.
   -- For example, the TX device (e.g., TX BS) receiving the target sensing area information may transmit a sensing RS.
      --- For example, the TX device (e.g., TX BS) may transmit a sensing RS based on beamforming toward the direction of the target sensing area.
      --- For example, the TX device (e.g., TX BS) may transmit a sensing RS within a threshold time from the time when the target sensing area information is received.
      --- For example, the TX device (e.g., TX BS) may transmit an ID associated with the RX device (e.g., RX UE) requesting the sensing RS transmission through an associated control channel while transmitting the sensing RS.
         ---- For example, the ID associated with the RX device (e.g., RX UE) transmitted through the control channel may perform the role of feedback indicating that the TX device (e.g., TX BS) has successfully received the sensing RS transmission request of the RX device (e.g., RX UE).
         ---- For example, the associated ID may be a source ID of the RX device (e.g., RX UE).
      --- For example, the TX device (e.g., TX BS) may transmit an ID associated with the TX device (e.g., TX BS) itself through an associated control channel while transmitting the sensing RS.
         ---- For example, the associated ID may be a cell ID of the TX device (e.g., TX BS).
         ---- For example, if the TX device (e.g., TX BS) is a TX transmission-reception point (TRP), the associated ID may be a transmission-reception point (TRP) ID of the TX device (e.g., TX BS).
   -- For example, the RX device (e.g., RX UE) may report a sensing result for the sensing RS to the TX device (e.g., TX BS) or the SMF.
      --- For example, the report may include an ID associated with the TX device (e.g., TX BS).
      --- For example, the report may include an ID associated with the RX device (e.g., RX UE).
      --- For example, the report may include an ID associated with the sensing RS.
      --- For example, the report may include ID information associated with a resource on which the sensing RS is transmitted and/or a location of the resource.

Based on various embodiments of the present disclosure, a method for efficiently performing BS-UE sensing may be proposed based on an entity that determines a target sensing area for the case of BS-UE sensing operation.

For example, whether the rule is applied and/or the proposed method/rule related parameter value of the present disclosure may be configured/allowed specifically (or differently or independently) for a service type. For example, whether the rule is applied and/or the proposed method/rule related parameter value of the present disclosure may be configured/allowed specifically (or differently or independently) for a (LCH or service) priority. For example, whether the rule is applied and/or the proposed method/rule related parameter value of the present disclosure may be configured/allowed specifically (or differently or independently) for a QoS requirement (e.g., latency, reliability, minimum communication range). For example, whether the rule is applied and/or the proposed method/rule related parameter value of the present disclosure may be configured/allowed specifically (or differently or independently) for a PQI parameter. For example, whether the rule is applied and/or the proposed method/rule related parameter value of the present disclosure may be configured/allowed specifically (or differently or independently) for a SL HARQ feedback ENABLED LCH/MAC PDU (transmission). For example, whether the rule is applied and/or the proposed method/rule related parameter value of the present disclosure may be configured/allowed specifically (or differently or independently) for a SL HARQ feedback DISABLED LCH/MAC PDU (transmission). For example, whether the rule is applied and/or the proposed method/rule related parameter value of the present disclosure may be configured/allowed specifically (or differently or independently) for a CBR measurement value of a resource pool. For example, whether the rule is applied and/or the proposed method/rule related parameter value of the present disclosure may be configured/allowed specifically (or differently or independently) for a SL cast type (e.g., unicast, groupcast, broadcast). For example, whether the rule is applied and/or the proposed method/rule related parameter value of the present disclosure may be configured/allowed specifically (or differently or independently) for a SL groupcast HARQ feedback option (e.g., NACK only feedback, ACK/NACK feedback, NACK only feedback based on TX-RX distance). For example, whether the rule is applied and/or the proposed method/rule related parameter value of the present disclosure may be configured/allowed specifically (or differently or independently) for a SL mode 1 CG type (e.g., SL CG type 1 or SL CG type 2). For example, whether the rule is applied and/or the proposed method/rule related parameter value of the present disclosure may be configured/allowed specifically (or differently or independently) for a SL mode type (e.g., mode 1 or mode 2). For example, whether the rule is applied and/or the proposed method/rule related parameter value of the present disclosure may be configured/allowed specifically (or differently or independently) for a resource pool. For example, whether the rule is applied and/or the proposed method/rule related parameter value of the present disclosure may be configured/allowed specifically (or differently or independently) for whether a PSFCH resource is configured in a resource pool. For example, whether the rule is applied and/or the proposed method/rule related parameter value of the present disclosure may be configured/allowed specifically (or differently or independently) for a source (L2) ID. For example, whether the rule is applied and/or the proposed method/rule related parameter value of the present disclosure may be configured/allowed specifically (or differently or independently) for a destination (L2) ID. For example, whether the rule is applied and/or the proposed method/rule related parameter value of the present disclosure may be configured/allowed specifically (or differently or independently) for a PC5 RRC connection link. For example, whether the rule is applied and/or the proposed method/rule related parameter value of the present disclosure may be configured/allowed specifically (or differently or independently) for a SL link. For example, whether the rule is applied and/or the proposed method/rule related parameter value of the present disclosure may be configured/allowed specifically (or differently or independently) for a connection state (e.g., RRC CONNECTED state, IDLE state, INACTIVE state) (with a base station). For example, whether the rule is applied and/or the proposed method/rule related parameter value of the present disclosure may be configured/allowed specifically (or differently or independently) for a SL HARQ process (ID). For example, whether the rule is applied and/or the proposed method/rule related parameter value of the present disclosure may be configured/allowed specifically (or differently or independently) for whether to perform SL DRX operation (of TX UE or RX UE). For example, whether the rule is applied and/or the proposed method/rule related parameter value of the present disclosure may be configured/allowed specifically (or differently or independently) for whether a UE is a power saving (TX or RX) UE. For example, whether the rule is applied and/or the proposed method/rule related parameter value of the present disclosure may be configured/allowed specifically (or differently or independently) for a case where (from a specific UE perspective) PSFCH TX and PSFCH RX (and/or a plurality of PSFCH TX (exceeding UE capabilities)) overlap (and/or PSFCH TX (and/or PSFCH RX) is omitted). For example, whether the rule is applied and/or the proposed method/rule related parameter value of the present disclosure may be configured/allowed specifically (or differently or independently) for a case where the RX UE actually (successfully) receives PSCCH (and/or PSSCH) (re)transmission from the TX UE.

For example, in the present disclosure, the term "configure/configured (or designate/designated)" may be extended and interpreted as a form in which the base station informs the UE through a pre-defined (physical layer or higher layer) channel/signal (e.g., SIB, RRC, MAC CE) (and/or a form provided through pre-configuration and/or a form in which the UE informs other UEs through a pre-defined (physical layer or higher layer) channel/signal (e.g., SL MAC CE, PC5 RRC)), etc.

For example, in the present disclosure, the term "PSFCH" may be extended and interpreted as (NR or LTE) PSSCH (and/or (NR or LTE) PSCCH) (and/or (NR or LTE) SL SSB (and/or UL channel/signal)). In addition, the proposed methods of the present disclosure may be extended and used in combination with each other (in the form of a new method).

For example, in the present disclosure, a specific threshold may refer to a threshold pre-defined or (pre-)configured by the network or the base station or the upper layer (including the application layer) of the UE. For example, in the present disclosure, a specific configured value may refer to a value pre-defined or (pre-)configured by the network or the base station or the upper layer (including the application layer) of the UE. For example, the operation configured by the network/base station may refer to the operation in which the base station (pre-)configures to the UE through higher layer RRC signaling, configures/signals to the UE through MAC CE, or signals to the UE through DCI.

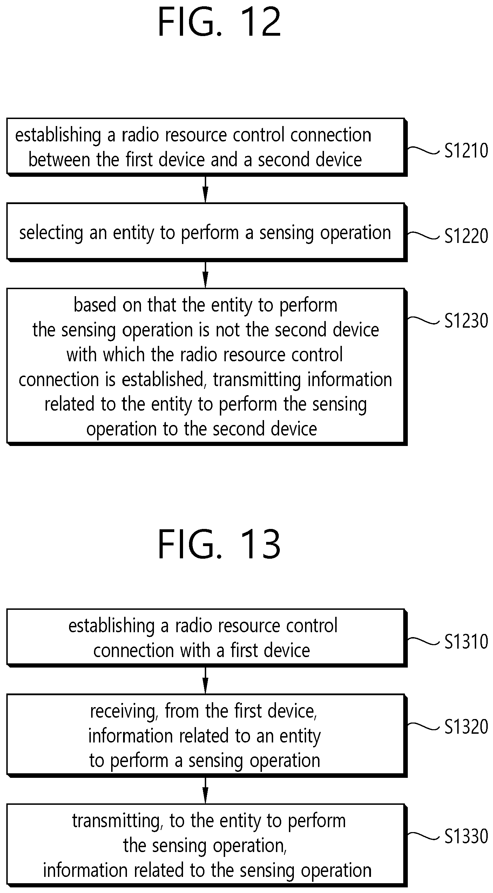

FIG. 12 shows a method performed by a first device, based on an embodiment of the present disclosure. The embodiment of FIG. 12 may be combined with various embodiments of the present disclosure.

Referring to FIG. 12, in step S1210, for example, the first device may establish a radio resource control connection between the first device and a second device. In step S1220, for example, the first device may select an entity to perform a sensing operation. In step S1230, for example, the first device may, based on that the entity to perform the sensing operation is not the second device with which the radio resource control connection is established, transmit information related to the entity to perform the sensing operation to the second device.

Additionally, or alternatively, the information related to the entity may include information related to an ID regarding the entity.

Additionally, or alternatively, the sensing operation may comprise at least one operation of transmission of a first sensing signal, or reception of a second sensing signal impacted by an object or an environment surrounding the object.

Additionally, or alternatively, information related to a target sensing area for which sensing is required may be transmitted to the entity.

Additionally, or alternatively, based on information related to a target sensing area for which sensing is required, the entity to perform the sensing operation may be selected.

Additionally, or alternatively, the information related to the target sensing area may include at least one of information regarding a first threshold distance from a boundary of the target sensing area or information regarding a second threshold distance from a center of the target sensing area.

Additionally, or alternatively, based on information regarding a line-of-sight propagation path between the first device and the entity, the entity to perform the sensing operation may be selected.

Additionally, or alternatively, the information related to the target sensing area may be obtained through a downlink channel.

Additionally, or alternatively, information related to a result of the sensing operation may be obtained.

Additionally, or alternatively, the information related to the result of the sensing operation may include information regarding an ID related to the entity to perform the sensing operation.

Additionally, or alternatively, the ID may include at least one of a source ID or a destination ID.

Additionally, or alternatively, the information related to the result of the sensing operation may include information regarding a sequence ID related to a sensing signal used for the sensing operation.

Additionally, or alternatively, the information related to the result of the sensing operation may include information regarding a sensing resource used for the sensing operation.

The proposed method may be applied to devices based on various embodiments of the present disclosure. First, the memory 104 of the first device 100 may store instructions that, based on being executed by the processor 102, cause the first device (e.g., the processor 102, the transceiver 106) to perform operations. For example, the operations may comprise at least one of: establishing a radio resource control connection between the first device and a second device; selecting an entity to perform a sensing operation; and/or based on that the entity to perform the sensing operation is not the second device with which the radio resource control connection is established, transmitting information related to the entity to perform the sensing operation to the second device.

In an embodiment, a method is provided that is performed by a first device. For example, the first device may establish a radio resource control connection between the first device and a second device. For example, the first device may select an entity to perform a sensing operation. For example, the first device may, based on that the entity to perform the sensing operation is not the second device with which the radio resource control connection is established, transmit information related to the entity to perform the sensing operation to the second device.

In an embodiment, a first device is provided. The first device may comprise: at least one transceiver; at least one processor; and at least one memory connected to the at least one processor and storing instructions that, based on being executed by the at least one processor, cause the first device to perform operations. For example, the operations may comprise at least one of: establishing a radio resource control connection between the first device and a second device; selecting an entity to perform a sensing operation; and/or based on that the entity to perform the sensing operation is not the second device with which the radio resource control connection is established, transmitting information related to the entity to perform the sensing operation to the second device.

In an embodiment, a processing device adapted to control a first device is provided. The processing device may comprise: at least one processor; and at least one memory connected to the at least one processor and storing instructions that, based on being executed by the at least one processor, cause the first device to perform operations. For example, the operations may comprise at least one of: establishing a radio resource control connection between the first device and a second device; selecting an entity to perform a sensing operation; and/or based on that the entity to perform the sensing operation is not the second device with which the radio resource control connection is established, transmitting information related to the entity to perform the sensing operation to the second device.

In an embodiment, a non-transitory computer-readable storage medium storing instructions is provided. The instructions may cause a first device to perform operations. For example, the operations may comprise at least one of: establishing a radio resource control connection between the first device and a second device; selecting an entity to perform a sensing operation; and/or based on that the entity to perform the sensing operation is not the second device with which the radio resource control connection is established, transmitting information related to the entity to perform the sensing operation to the second device.

FIG. 13 shows a method performed by a second device, based on an embodiment of the present disclosure. The embodiment of FIG. 13 may be combined with various embodiments of the present disclosure.

Referring to FIG. 13, in step S1310, for example, the second device may establish a radio resource control connection with a first device. In step S1320, for example, the second device may receive, from the first device, information related to an entity to perform a sensing operation. In step S1330, for example, the second device may perform the sensing operation. In step S1340, for example, the second device may transmit information related to the sensing operation to the entity.

Additionally, or alternatively, the sensing operation may comprise at least one operation of transmission of a first sensing signal, or reception of a second sensing signal impacted by an object or an environment surrounding the object.

Additionally, or alternatively, the information related to the entity may include information related to an ID regarding the entity.

Additionally, or alternatively, the sensing operation may comprise at least one operation of transmission of a first sensing signal, or reception of a second sensing signal impacted by an object or an environment surrounding the object.

Additionally, or alternatively, information related to a target sensing area for which sensing is required may be transmitted to the entity.

Additionally, or alternatively, based on information related to a target sensing area for which sensing is required, the entity to perform the sensing operation may be selected.

Additionally, or alternatively, the information related to the target sensing area may include at least one of information regarding a first threshold distance from a boundary of the target sensing area or information regarding a second threshold distance from a center of the target sensing area.

Additionally, or alternatively, based on information regarding a line-of-sight propagation path between the first device and the entity, the entity to perform the sensing operation may be selected. Additionally, or alternatively, the information related to the target sensing area may be obtained through a downlink channel.

Additionally, or alternatively, information related to a result of the sensing operation may be obtained.

Additionally, or alternatively, the information related to the result of the sensing operation may include information regarding an ID related to the entity to perform the sensing operation.

Additionally, or alternatively, the ID may include at least one of a source ID or a destination ID.

Additionally, or alternatively, the information related to the result of the sensing operation may include information regarding a sequence ID related to a sensing signal used for the sensing operation.

Additionally, or alternatively, the information related to the result of the sensing operation may include information regarding a sensing resource used for the sensing operation.

The proposed method may be applied to devices based on various embodiments of the present disclosure. First, the memory 204 of the second device 200 may store instructions that, based on being executed by the processor 202, cause the second device (e.g., the processor 202, the transceiver 206) to perform operations. For example, the operations may comprise at least one of: establishing a radio resource control connection with a first device; receiving, from the first device, information related to an entity to perform a sensing operation; and/or transmitting, to the entity to perform the sensing operation, information related to the sensing operation.

In an embodiment, a method is provided that is performed by a second device. For example, the second device may receive sensing operation request information for requesting a sensing operation. For example, the second device may perform the sensing operation. For example, the second device performing the sensing operation may be included in at least one member for which a line-of-sight within a sensing group is secured.

In an embodiment, a second device is provided. The second device may comprise: at least one transceiver; at least one processor; and at least one memory connected to the at least one processor and storing instructions that, based on being executed by the at least one processor, cause the second device to perform operations. For example, the operations may comprise at least one of: establishing a radio resource control connection with a first device; receiving, from the first device, information related to an entity to perform a sensing operation; and/or transmitting, to the entity to perform the sensing operation, information related to the sensing operation.

In an embodiment, a processing device (apparatus) adapted to control a second device is provided. The processing device (apparatus) may comprise: at least one processor; and at least one memory connected to the at least one processor and storing instructions that, based on being executed by the at least one processor, cause the second device to perform operations. For example, the operations may comprise at least one of: establishing a radio resource control connection with a first device; receiving, from the first device, information related to an entity to perform a sensing operation; and/or transmitting, to the entity to perform the sensing operation, information related to the sensing operation.

In an embodiment, a non-transitory computer-readable storage medium storing instructions is provided. The instructions may cause a second device to perform operations. For example, the operations may comprise at least one of: establishing a radio resource control connection with a first device; receiving, from the first device, information related to an entity to perform a sensing operation; and/or transmitting, to the entity to perform the sensing operation, information related to the sensing operation.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

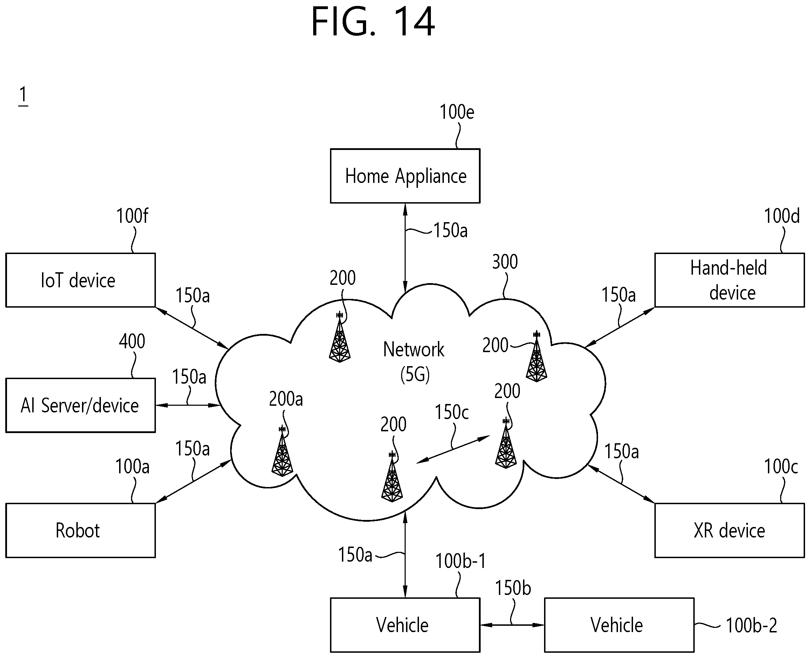

FIG. 14 shows a communication system 1, based on an embodiment of the present disclosure. The embodiment of FIG. 14 may be combined with various embodiments of the present disclosure.

Referring to FIG. 14, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

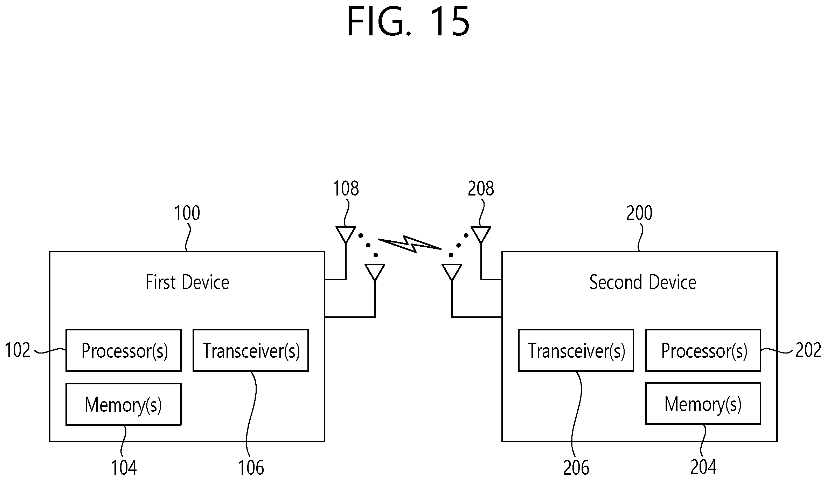

FIG. 15 shows wireless devices, based on an embodiment of the present disclosure. The embodiment of FIG. 15 may be combined with various embodiments of the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 206 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

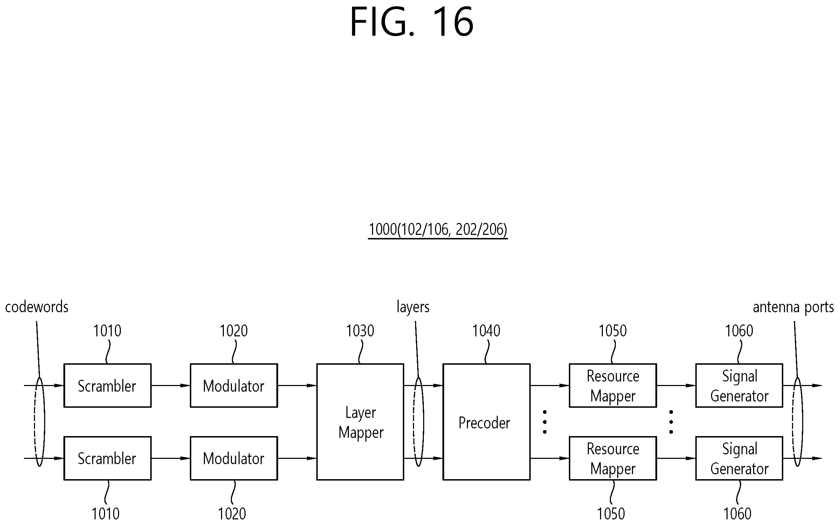

FIG. 16 shows a signal process circuit for a transmission signal, based on an embodiment of the present disclosure. The embodiment of FIG. 16 may be combined with various embodiments of the present disclosure.

Referring to FIG. 16, a signal processing circuit 1000 may include scramblers 1010, modulators 1020, a layer mapper 1030, a precoder 1040, resource mappers 1050, and signal generators 1060. An operation/function of FIG. 16 may be performed, without being limited to, the processors 102 and 202 and/or the transceivers 106 and 206 of FIG. 15. Hardware elements of FIG. 16 may be implemented by the processors 102 and 202 and/or the transceivers 106 and 206 of FIG. 15. For example, blocks 1010 to 1060 may be implemented by the processors 102 and 202 of FIG. 15. Alternatively, the blocks 1010 to 1050 may be implemented by the processors 102 and 202 of FIG. 15 and the block 1060 may be implemented by the transceivers 106 and 206 of FIG. 15.

Codewords may be converted into radio signals via the signal processing circuit 1000 of FIG. 16. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 16. For example, the wireless devices (e.g., 100 and 200 of FIG. 15) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

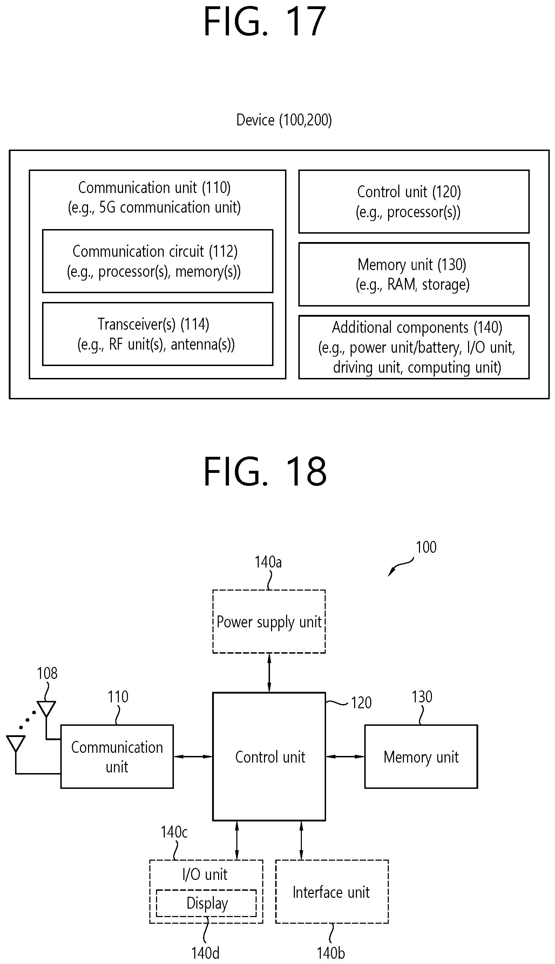

FIG. 17 shows another example of a wireless device, based on an embodiment of the present disclosure. The wireless device may be implemented in various forms according to a use-case/service (refer to FIG. 14). The embodiment of FIG. 17 may be combined with various embodiments of the present disclosure.

Referring to FIG. 17, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 17, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 17 will be described in detail with reference to the drawings.

FIG. 18 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 18 may be combined with various embodiments of the present disclosure.

Referring to FIG. 18, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 17, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

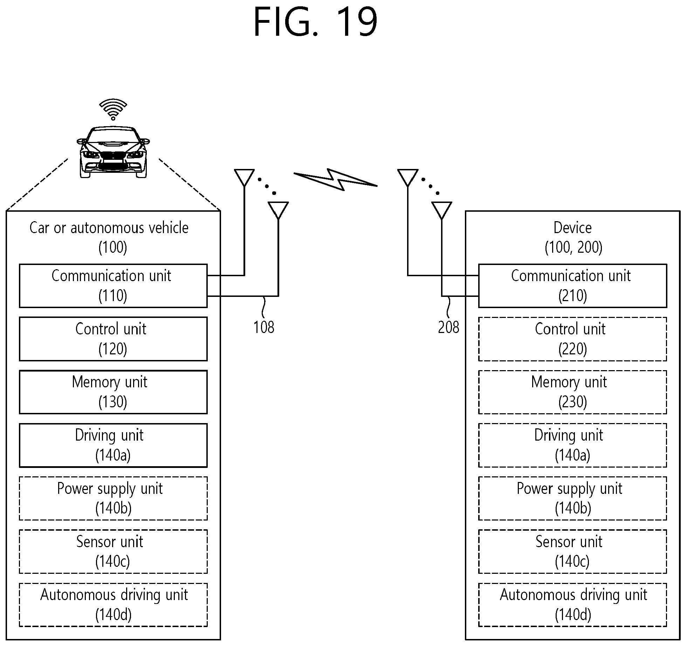

FIG. 19 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 19 may be combined with various embodiments of the present disclosure.

Referring to FIG. 19, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 17, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method performed by a first device, the method comprising:
establishing a radio resource control connection between the first device and a second device;
selecting an entity to perform a sensing operation; and
based on that the entity to perform the sensing operation is not the second device with which the radio resource control connection is established, transmitting information related to the entity to perform the sensing operation to the second device.

2. The method of claim 1, wherein the information related to the entity includes information related to an ID regarding the entity.

3. The method of claim 1, wherein the sensing operation comprises at least one operation of transmission of a first sensing signal, or reception of a second sensing signal impacted by an object or an environment surrounding the object.

4. The method of claim 1, further comprising:
transmitting, to the entity, information related to a target sensing area for which sensing is required.

5. The method of claim 1, wherein, based on information related to a target sensing area for which sensing is required, the entity to perform the sensing operation is selected.

6. The method of claim 5, wherein the information related to the target sensing area includes at least one of information regarding a first threshold distance from a boundary of the target sensing area or information regarding a second threshold distance from a center of the target sensing area.

7. The method of claim 1, wherein, based on information regarding a line-of-sight propagation path between the first device and the entity, the entity to perform the sensing operation is selected.

8. The method of claim 5, wherein the information related to the target sensing area is obtained through a downlink channel.

9. The method of claim 1, further comprising:
obtaining information related to a result of the sensing operation.

10. The method of claim 9, wherein the information related to the result of the sensing operation includes information regarding an ID related to the entity to perform the sensing operation.

11. The method of claim 10, wherein the ID includes at least one of a source ID or a destination ID.

12. The method of claim 9, wherein the information related to the result of the sensing operation includes information regarding a sequence ID related to a sensing signal used for the sensing operation.

13. The method of claim 9, wherein the information related to the result of the sensing operation includes information regarding a sensing resource used for the sensing operation.

14. A first device, comprising:
at least one transceiver;
at least one processor; and
at least one memory connected to the at least one processor and storing instructions that, based on being executed by the at least one processor, cause the first device to perform operations comprising:
establishing a radio resource control connection between the first device and a second device;
selecting an entity to perform a sensing operation; and
based on that the entity to perform the sensing operation is not the second device with which the radio resource control connection is established, transmitting information related to the entity to perform the sensing operation to the second device.

15. A processing device adapted to control a first device, the processing device comprising:
at least one processor; and
at least one memory connected to the at least one processor and storing instructions that, based on being executed by the at least one processor, cause the first device to perform operations comprising:
establishing a radio resource control connection between the first device and a second device;
selecting an entity to perform a sensing operation; and
based on that the entity to perform the sensing operation is not the second device with which the radio resource control connection is established, transmitting information related to the entity to perform the sensing operation to the second device.

16. A non-transitory computer-readable storage medium storing instructions that, when executed, cause a first device to perform operations comprising:
establishing a radio resource control connection between the first device and a second device;
selecting an entity to perform a sensing operation; and
based on that the entity to perform the sensing operation is not the second device with which the radio resource control connection is established, transmitting information related to the entity to perform the sensing operation to the second device.

17. A method performed by a second device, the method comprising:
establishing a radio resource control connection with a first device;
receiving, from the first device, information related to an entity to perform a sensing operation; and
transmitting, to the entity to perform the sensing operation, information related to the sensing operation.

18. A second device, comprising:
at least one transceiver;
at least one processor; and
at least one memory connected to the at least one processor and storing instructions that, based on being executed by the at least one processor, cause the second device to perform operations comprising:
establishing a radio resource control connection with a first device;
receiving, from the first device, information related to an entity to perform a sensing operation; and
transmitting, to the entity to perform the sensing operation, information related to the sensing operation.

19. A processing apparatus adapted to control a second device, the processing apparatus comprising:
at least one processor; and
at least one memory connected to the at least one processor and storing instructions that, based on being executed by the at least one processor, cause the second device to perform operations comprising:
establishing a radio resource control connection with a first device;
receiving, from the first device, information related to an entity to perform a sensing operation; and
transmitting, to the entity to perform the sensing operation, information related to the sensing operation.

20. A non-transitory computer-readable storage medium storing instructions that, when executed, cause a second device to perform operations comprising:
establishing a radio resource control connection with a first device;
receiving, from the first device, information related to an entity to perform a sensing operation; and
transmitting, to the entity to perform the sensing operation, information related to the sensing operation.
